# EUROPEAN PATENT SPECIFICATION

(11) **EP 0 936 588 B1**
(45) Date of publication and mention of the grant of the patent: **04.08.2004**
(21) Application number: 98830108.1
(22) Date of filing: 27.02.1998
(51) Int. Cl.: G08B 13/193, G02B 3/08

(54) **Infrared radiation focussing lens and its making process**
Infrarotstrahlungsfokussierungslinse und ihr Herstellungsverfahren
Lentille pour focalisation du rayonnement infrarouge et procédé de fabrication

(30) Priority: 12.02.1998 IT TO980111
(43) Date of publication of application: 18.08.1999
(73) Proprietor: Elkron S.p.A., 10092 Beinasco (TO) (IT)
(72) Inventor: Vai, Carlo, 10092 Beinasco (TO) (IT)
(74) Representative: Dini, Roberto, Dr. Ing.

(56) References cited:
- WO-A-97/27634
- DE-A- 2 622 615
- DE-U- 29 503 531
- US-A- 4 769 545
- US-A- 5 134 292
- US-A- 5 641 964

## Description

The present invention refers to infrared radiation focusing lens, in particular for an antitheft device, and a manufacturing method thereof.

Antitheft devices comprise, along with an infrared radiation focusing lens, an infrared detecting element or sensor whereon infrared radiation is focused, an electronic circuit receiving the signal from the infrared detecting element, which processes its value to determine whether the infrared radiation received is a natural radiation produced by the monitored environment or is due to the presence of an intruder, and generates an alarm signal in the latter instance.

As it is known, a lens used to focus infrared radiation from outside is a Fresnel lens, hereafter called simply a lens.

Antitheft devices of the above type are known and used to keep under watch any kind of environments, such as industrial halls, warehouses, offices, trading centers, houses, etc.

They are also used for protecting any objects, such as art works, to detect if any intruder is approaching the object within a shorter distance than a preset safety distance.

Even if every environment to be protected has specific size and form characteristics, the infrared rays beam to be detected by the device through the lens must anyway be capable of covering to a maximum extent the environment to be protected.

As a result, said antitheft devices are manufactured in different ways according to their specific application, and can be generally split in three different types for three different applications associated with the characteristics of the environment to be protected.

A first type is designed for the protection of environments with an extended surface, where the infrared beam to be detected by the device through the lens has to cover very wide angles, which in some instances may reach or exceed 120°.

A second type is designed for the protection of long and narrow environments, like corridors, where the infrared beam to be detected by the device through the lens has to cover an angle being than 120°, but where infrared radiation from a farther distance has to be detected with respect to the first type.

A third type is designed for the protection of objects, such as art works, where the infrared beam extends over a continuous spatial area defined by flat surfaces being substantially parallel between themselves, such as to form a sort of a curtain in front of the object to be protected.

Manufacture of these three types of devices requires the use of three different types of lenses, whereby all three types of lenses have to be kept in stock to comply with customers' requests, and also production of the devices needs to be diversified with frequent production changes-overs.

This situation entails cost increases and a lack of production efficiency.

Moreover, when a technician is called for repairing or to replacing a device, he must be able to avail himself of a corresponding device, whereby he needs availability of all the three types of devices, or maybe only the three types of lenses with consequent higher storage charges for the materials.

In an attempt to overcome the above difficulties, some lenses have been produced, which allow to obtain two different detecting functions of infrared radiation, with one type of lens alone.

Said two functions can be obtained by a lens having two sections or segments, each segment having different characteristics from the other, so that each segment can perform a different detecting function.

A change of the detecting function of the device can be obtained by positioning the lens so that the focusing of the infrared radiation on the sensor is done through the segment suitable for the intended function.

Normally, a change of the infrared radiation focusing segment for these types of devices is obtained through a simple rotation of 180° of the lens on the device body

Normally, a change of the infrared radiation focusing segment for these types of devices is obtained through a simple rotation of 180° of the lens on the device body.

Manufacture of said double-function lenses according to the technological state of the art requires larger dimensions with respect to single-function lenses, with a consequent increase of material costs and sizes.

Moreover, such a type of lens does not fully solve the problem, since it still requires the use of a different lens to obtain the third function.

It is obvious that manufacture of a lens with more than two functions, according to the present state of the art and with the aim of maintaining its performances, would further increase the overall dimensions of the lens and consequently the size of the device using such a lens.

As a result, the advantages obtained by combining more than two functions on one same lens would be lost with a consequent cost increase both for the lens and device.

It should also be appreciated that in specific instances an extremely large size of the device may jeopardize its use.

Moreover, all known devices either preset for a single detecting function or provided to perform two detecting functions have a shadow zone in the lower part of the device, due to a flat or cylindrical form of the lens presently on the market, which reduces the performance of the device.

Due to these specific forms, the lens is no longer capable of detecting infrared radiation when its incidence angle exceeds a preset value.

As a result, such a shadow zone can be used for a likely tampering of the device.

To solve this problem, it is also known to provide an opening in the lower section of the device body, wherefrom infrared radiation may get through, which are reflected on the detecting sensor through a mirror incorporated inside the device.

Other known devices, on the contrary, are provided with an additional lens in the lower section of the device body.

Consequently, these systems require additional means, such as a mirror or an additional lens, with higher costs for both the material procurement and device manufacture.

It is known from US 5,134,292 a moving object detector and moving object detecting system with a body which includes a base for holding a sensor and a hemispheric hood (lens). The base can be rotated on a ball bearing with respect of the body so selecting three kinds of detecting area modes. An electrode is disposed on the bottom of the body and transmits signals between the sensor and an exterior control device. The electrode and the sensor are connected each other by a lead wire having a loose length. This represents a practical drawback.

It is also known from DE 295 03 531 U a moving object detector with an infrared sensor for detecting infrared emitting bodies and with a rotating hood (lens) with at least two different sectors. The hood is fixed to a box which rotates together with the hood. The adjustment is made rotating the hood and orienting the sensor. This solution appears not better than that of US 5,134,392.

It is known from US 5,641,964 a rather complicated infrared human body detector comprising groups of divided infrared ray converging members, a primary reflecting mirror member and a secondary reflecting mirror member. This detector is capable of achieving good detection sensitivity over the full angle range of 360°.

It is also known from DE 26 22 615 A a composite mirror, for detecting infrared rays from a plurality of separate viewing fields and reflecting the rays on a infrared sensor, the mirror being made of a plurality of concave reflecting surfaces, wherein the best orientation of the concave reflecting surfaces is found empirically.

It is known from WO 97 27634 A a heat radiation detection device, including a detector with one or more portions intended to be exposed to heat radiation and one or more portions intended to be protected from heat radiation. The device can be used for the surveillance of a room where many persons may be present.

It is the object of the present invention to solve the above problems and specifically provide an infrared radiation focusing lens, in particular for an antitheft device, wherein at least three detecting functions can be obtained, both with respect to the environment and objects to be protected, in a simple, easy, safe and inexpensive way.

To reach said purposes, it is the object of the present invention to provide an infrared radiation focusing lens and a manufacturing method thereof, having the characteristics of the annexed claims, which form an integral part of the present description of the invention.

Further objects and advantages of the present invention will become apparent from the following detailed description and annexed drawings supplied only by way of a non limiting example, wherein:
- Fig. 1 shows schematically an antitheft device as for the type available in trade;
- Figs. 2a and 2b show schematically a top view and a side view, respectively, of a first infrared radiation beam that can be detected by a lens according to the present invention;
- Figs. 3 and 3b show schematically a top view and a side view, respectively, of a second infrared radiation beam that can be detected by a lens according to the present invention;
- Figs. 4a and 4b show schematically a top view and a side view, respectively, of a third infrared radiation beam that can be detected by a lens according to the present invention;
- Fig. 5 shows a plan view of a lens according to the present invention;
- Fig. 6 shows a side view of a lens according to the present invention;
- Fig. 7 shows schematically a front view of a fourth infrared radiation beam that can be detected by a lens according to the present invention.

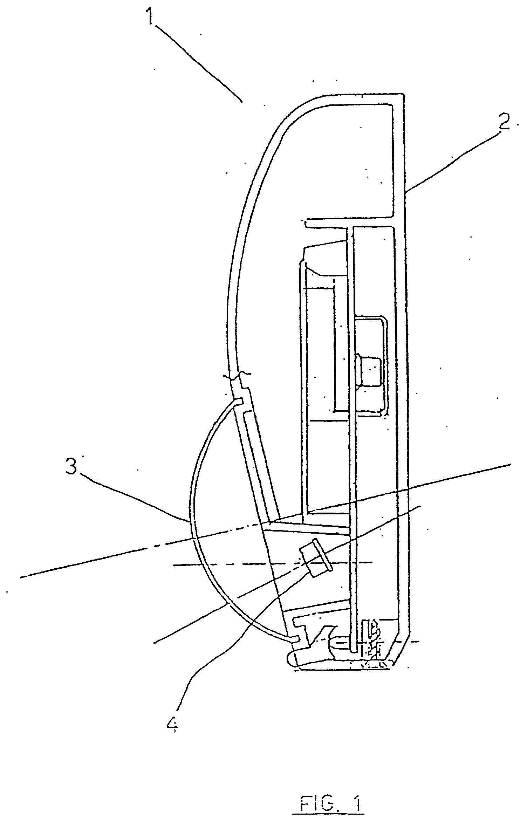

In figure 1, which shows schematically an antitheft device, number 1 indicates the device, number 2 the device body, number 3 a lens and number 4 an infrared radiation detecting element, hereafter called sensor, located inside the device 1, on the opposite face of the lens 3 and connected with an electronic circuit within the device 1.

Said electronic circuit is not represented in the figure, as it is known as a conventionally operating circuit.

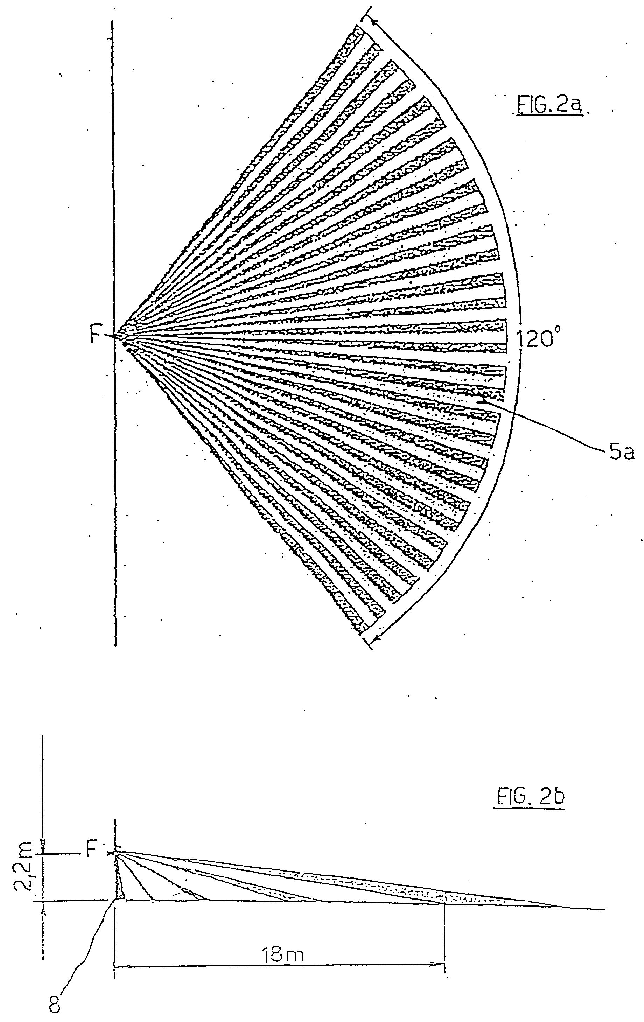

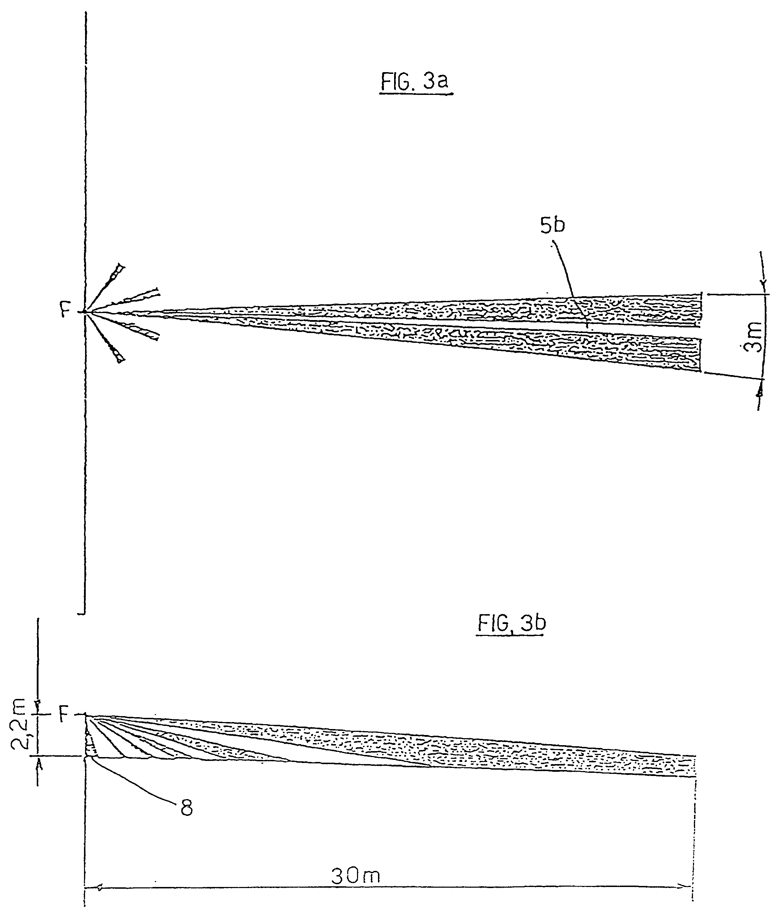

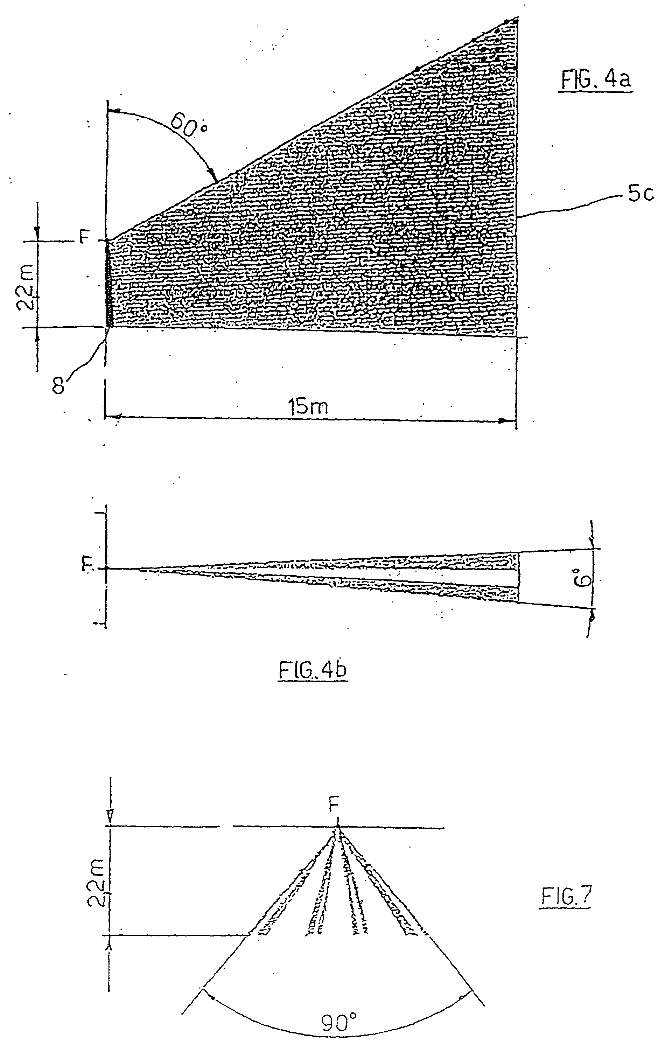

Figures 2a and 2b, 3a and 3b, 4a and 4b represent schematically some views of the various infrared beams that can be detected by the lens of an antitheft device according to the environment to be protected; according to the present state of the art, the use of a different lens on the device is required for each kind of infrared beam to be detected.

The letter F indicates the lens focus, numbers 5a, 5b and 5c indicate the various infrared beams that can be detected by the sensor as a function of the lens incorporated in the device.

The first type of beam 5a can be detected in environments to be protected extending over wide surfaces and having a visual range of about 120° or more; the second type of beam 5b can be detected in long and narrow environments, such as corridors, with a smaller visual range than 120°, but with a longer range than the first type 5a; the third type of beam 5c is the detectable beam for the protection of objects and covers a visual range extending over a continuous spatial area defined by flat surfaces, being substantially parallel between themselves, which form a tent-like protection in front of the object to be protected.

Said figures are also showing, purely by way of example, the values in meters of the infrared radiation beam that can be detected by the device lens according to the kind of environment to be protected.

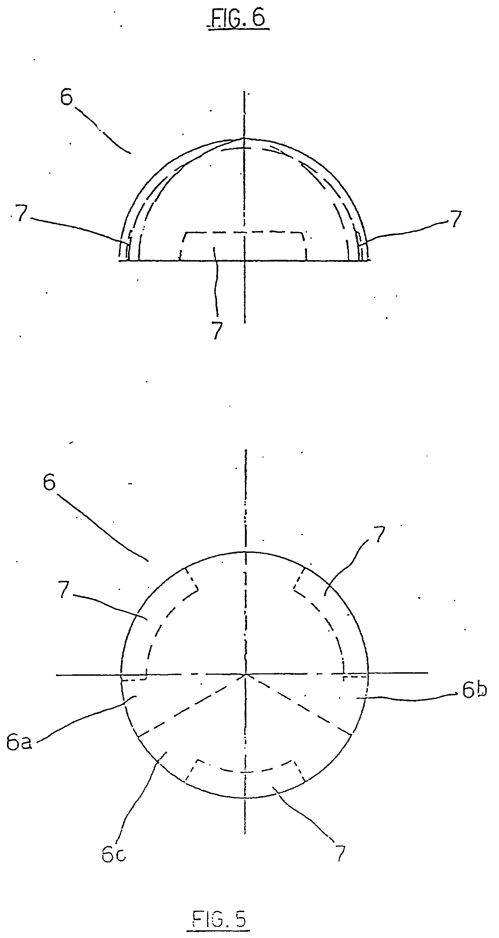

Figure 5 shows a plan view of a lens, indicated with number 6, which is used in an antitheft device according to the present invention.

Said lens 6 has substantially the form of a ball cap and consists of three segments having different characteristics between themselves, which are indicated with 6a, 6b e 6c, respectively.

Each segment shows a lens configuration suitable to carry out its own function, which is different from the function of the other two segments.

A first segment in fact detects and receives the infrared radiation covering for example a visual range of about 120°.

A second segment detects and receives an infrared radiation covering a visual range smaller than 120°, but having a longer visual range than the previous segment.

A third segment detects and receives an infrared radiation covering a visual range over a continuous spatial area defined by flat surfaces substantially parallel between themselves, so as to form a tent-like protection in front of the object to be protected.

The desired performance of the antitheft device is obtained placing the lens on the device body with the segment preset for its determined function in a position to focus infrared radiation on the sensor.

To change the detecting function of infrared radiation the lens can be rotated by 120° to position another segment in a suitable position to focus infrared radiation on the sensor.

A further 120° lens rotation will position another segment in a position to focus infrared radiation on the sensor, i.e. the antitheft device is preset to execute a third function.

Each lens segment has a certain number of elementary lenses different between themselves, each one assigned to a specific detecting function of infrared radiation from different points and their relevant focus on the sensitive element.

Therefore, the segment dimensions and consequently the lens size is bound to the dimensions of the elementary lenses composing it.

Sizing of a lens with at least three functions within the dimensions of a usual single-function lens requires optimization of the size of the elementary lenses composing it.

Said dimensional optimization of the elementary lenses is made possible with the method to manufacture the lens 6.

Said manufacturing method comprises the measurement of the diagram of incident radiation on each elementary lens, the determination of a detectable minimum threshold signal and the determination of the areas of the elementary lenses fit to provide such a threshold signal.

This is obtained through the following procedure:
- Use of an antitheft device similar to the one wherein the lens according to the invention has to be incorporated.
   Two devices are considered similar if they have the same sensitive element and the electronic amplifiers have the same characteristics (gain and passband).
- Replacement on the sample device of its Fresnel lens with a conventional sample lens, being qualitatively improved and whose features are known.
- Selection of a person as an infrared radiation source according to Standards specifications, i.e. about 175 cm tall and weighing about 70 kg.
- Measurement of the output signal of the device amplifier according to the change of the dimensions of the lens, of the distance of the infrared emitting source and of the angle of the sensitive element with respect to the lens.
   The sensitive element should not be licked by even the lightest air drafts, in order to avoid falsing the measurement values.
   To change the lens dimensions a shutter can be used.
- Evaluation of the efficiency of the sensitive element in function of the incidence angle of the infrared radiation emitted by the source.
- Theoretic evaluation of the absorption of the material used to manufacture the lens according to the invention, with reference to the sample lens used for measurement purposes.
- Theoretic evaluation, based on the geometry, for each elementary lens, of the portion of the incident signal which is reflected and of the portion which is transmitted.
- Theoretic evaluation, based on the geometry and in function of the deflection angle which is desired, as to the elementary lenses where refraction should be used and as to the elementary lenses where total internal reflection should be used.
- Calculation of the dimension of all the elementary lenses in order to obtain an output signal of the amplifier being independent from the area under control and equaling a minimum preset threshold value.

According to this procedure, the dimensions of the areas of the elementary lens can be determined, in order to have a minimum preset operating threshold value, and therefore a lens can be obtained having at least three detecting functions being different between themselves and restricted dimensions, without a cost increase for the lens and the lens holding device.

During the detecting operations for defining the areas of the elementary lenses according to the procedure described above, it has been ascertained that a size variation of the lens is also influenced by the distribution pattern of the radiation coming from the source, which is incident on the lens and is received by the sensitive element in relation to the source distance from the device.

In fact, the surface of the sensitive element is interested by the whole or just a portion of the total radiation emitted by the source.

When the radiation source is near the device, the elementary lens carrying out this function detects only a part of the source image, since the source is bigger than the space the elementary lens is able to see.

Therefore, the sensitive element only detects a portion of the image focused on it by the elementary lens.

In said zone, the more the radiation source moves away from the device, the more the range will fall quadratically with the increase of the distance, and at the same time an increasingly larger portion of the source is focused on the sensitive element with a quadratic increase compensating the range exhaustion.

Therefore, since the source remains in the zone near the lens, the signal transmitted on the sensitive element is independent from the distance of the source from the lens.

This means that, assuming that said near zone has dimensions of 0 to 8 meters, to obtain a constant signal an elementary lens looking at a 3 meters distance should have the same dimensions as another which looks at a 6 meters distance.

The near zone ends and the intermediate zone begins as soon as the elementary lens preset for this distance detects and transmits a source image to the sensitive element, which will be a reduced image due to the distance between the source and the device, such to comprise the whole horizontal dimension and a portion of the vertical dimension of the source.

In the intermediate zone, which can be assumed of 8 to 20 meters, the signal intensity on the sensitive element changes linearly with the varying of the distance between the radiation source and the device.

This means that, in order to obtain a constant signal, an elementary lens looking at about 20 meters distance should be double the size of the one looking at 10 meters.

By moving the radiation source further away from the device and placing it over the visual range of the intermediate zone, the elementary lens preset for this distance will detect and transmit the whole image of the source to the sensitive element, but this is an even smaller image, due to the farther distance of the source from the device.

In this instance, the image focused on the sensitive element will be a complete image of the source.

The signal intensity on the sensitive element, by passing from the intermediate position to a farther position from the device, varies quadratically with the changing of the distance between the radiation source and the device.

Therefore, two elementary lenses both looking at the distant zone have quadruple relative dimensions, if one of them looks at a double distance with respect to the other.

In all instances, signal intensity on the sensor depends only on the area of the elementary lens.

As a result, according to the above, it is possible to optimize the lens through the data that can be thus obtained and manufacture elementary lenses adequately sized for the functions to be executed, so as to transmit a minimum detectable threshold signal to the sensitive element.

Thus, the lens can have restricted overall dimensions.

The form of the lens, which is substantially that of a ball cap, also allows to detect radiation's from the area underneath the device, since the incidence angle of said infrared radiation on the lens is substantially that of other infrared radiation's that can be detected by the lens.

As a result, it is no longer necessary to use additional elements, such as a mirror or an additional lens.

It is quite obvious, within the scope of the invention, that many changes are possible to the manufacturing features of the infrared radiation focusing lens described by way of example, without departing from the novelty principles of the innovative idea; and it is also clear that in the practical actuation of the invention, both the forms and dimensions of the components may differ and be replaced with technical equivalent elements.

For instance, to improve the optical yield of the lens 6, an area of it can be obtained based on the physical principle of the total internal reflection, which has the properties of obtaining high deflection angles of the incident radiation.

Said area is indicated with number 7 in the figures 5 and 6, and can also be obtained to improve detection of infrared radiation's from the area underneath the device, indicated with number 8 in the figures 2b, 3b and 4a.

Fig. 7 shows the infrared radiation's beam detected by the area 7 of the lens 6.

The size of the area 7 does not necessarily need to be the same for all three lens segments 6a, 6b, and 6c, but it may also differ according to the performances required of the lens.

Moreover, in order to improve the optical yield of the lens 6, always as a function of the requested performance, each segment can be obtained using the physical principle of the total internal reflection either wholly or partially.

Thus, improvement of the optical yield also allows to reduce and/or optimize the dimensions of the lens itself.

Fig. 7 shows the infrared radiation's beam detected by the area 7 of the lens 6.

The size of the area 7 does not necessarily need to be the same for all three lens segments 6a, 6b, and 6c, but it may also differ according to the performances required of the lens.

Moreover, in order to improve the optical yield of the lens 6, always as a function of the requested performance, each segment can be obtained using the physical principle of the total internal reflection either wholly or partially.

Thus, improvement of the optical yield also allows to reduce and/or optimize the dimensions of the lens itself.

As it ensues from the above description, the infrared radiation focusing lens for an antitheft device according to the present invention is provided in a simple way for nearly all environments and objects to be protected, as only the lens on the antitheft device needs to be positioned according to the environment or object to be protected.

Moreover, material costs to manufacture such a lens are low as the lens has substantially the same size as for a conventional lens, as previously said.

Thus, also the antitheft device carrying said lens does not require to have overall dimensions that are substantially different from a conventional device.

Moreover, the antitheft device can be manufactured in one configuration alone for simpler production and materials procurement purposes.

Also, either a change or choice of its function can be made directly by the installer.

Moreover, detection of infrared radiation's in the area underneath the device does not require any additional parts, in order to avoid any tampering possibility of the device itself.

It is quite obvious, within the scope of the present invention, that many changes are possible to the manufacturing features of the infrared radiation focusing lens described by way of example, without departing from the scope of the invention as defined in the appended claims; and it is also clear that in the practical actuation of the invention both the forms and dimensions of the components may differ and be replaced with technical equivalent elements.

## Claims

1. An infrared detection device (1), namely an antitheft device, comprising a body (2), at least one infrared sensor (4) located in said body (2) and an infrared focusing lens (3, 6), comprising a plurality of elementary lenses, said focusing lens (3, 6) having at least three segments (3a, 3b, 3c; 6a, 6b, 6c) whose infrared radiation focusing features differ between themselves,
wherein
said elementary lenses are chosen so that, under a condition of highest performance, the level of the required minimum infrared signal which can be detected by the sensor is higher than the operating threshold value of the sensor itself, and
said lens (6) is capable of detecting infrared radiation from at least three different visual ranges in relation to the environment to be protected,
**characterized in that** said visual range is selected only through rotating said lens in respect of the body of the detection device and the said sensor.

2. Infrared detection device according to claim 1, **characterized in that** each of said segments (6a,6b,6c) has a zone (7) on their end capable of detecting infrared radiations coming from the area directly under the device (1).

3. Infrared detection device according to claim 2, **characterized in that** said zone (7) capable of detecting infrared radiations coming from the area directly under the device (1) is manufactured according to the principle of the total internal reflection, in order to improve its optical yield.

4. lnfrared detection device according to one or more of the preceding claims **characterized in that** a first of said segment (6a, 6b, 6c) allows the detection of infrared radiation of a visual range (5a) that may reach and/or exceed 120°.

5. Infrared detection device according to claim 4, **characterized in that** a second of said segments (6a, 6b, 6c) allows the detection of infrared radiation of a visual range (5b) that is less than 120°, but to a farther length than said first segment (5a).

6. Infrared detection device according to claim 4, **characterized in that** a third of said segments (6a, 6b, 6c) allows the detection of infrared radiation (5) spreading over a continuous spatial surface defined by flat surfaces substantially parallel between themselves.

7. Infrared detection device according to claim 4, **characterized in that**, in order to improve the optical yield, at least one and/or a part of said segments (6a,6b,6c) is manufactured according to the principle of the total internal reflection.

8. Infrared detection device according to claim 4, **characterized in that** said optical yield improvement reaches such a level ensuring size reduction and/or size optimization of said lens (6).

9. Infrared detection device according to one or more of the preceding claims, **characterized in that** the change of the detecting function of infrared radiation is obtained only by rotating said lens (6) by 120° on the device (1).

10. A manufacturing method for an infrared detection device according to any of claims 1 to 9, wherein the manufacturing of said infrared radiation focusing lens (3, 6) comprises the following steps:
- measurement of the diagram of the radiation incident on each elementary lens,
- determination of a detectable minimum threshold signal,
- determination of the areas of the elementary lens capable of supplying said threshold signal,
**characterized in that** the method further comprises the following steps:
- use of an antitheft device including the same sensitive element and electronic amplifiers which have the same features, that is gain and passband, of the final device onto which the lens has to be assembled,
- replacement on the sample device of its Fresnel lens with a conventional sample lens, which is qualitatively improved and whose features are known,
- selection of a person as an infrared radiation source according to Standards specifications,
- measurement of the output signal of the device amplifier according to the varying of the dimensions of the lens, of the distance of the infrared emission source and of the angle of the sensitive element with respect to the lens,
- efficiency evaluation of the sensitive element in function of the incidence angle of the infrared radiation emitted by the source,
- theoretic evaluation of the absorption of the material used to manufacture the final lens, with reference to the sample lens used for measurement purposes,
- theoretic evaluation, based on the geometry, for each elementary lens, of the portion of the incident signal which is reflected and of the portion which is transmitted,
- theoretic evaluation, based on the geometry and in function of the deflection angle which is desired, as to the elementary lenses where refraction should be used and as to the elementary lenses where total internal reflection should be used.
- calculation of the dimension of all the elementary lenses in order to obtain an output signal of the amplifier being independent from the area under control and equaling a minimum preset threshold value.

11. Method according to claim 10, **characterized in that** the measurement of the output signal of the amplifier of the device determines, in relation to the varying of the distance of the infrared emission source, the pattern of the distribution of the radiation coming from the source being incident on the lens and received by the sensitive element.

12. Method according to claim 11, **characterized in that** the surface of the sensitive element is interested by the whole or just a portion of the total radiation emitted by the source.

13. Method according to claim 11, **characterized in that** under a first operating condition the signal intensity on the sensitive element is independent from the distance of the source from the device.

14. Method according to claim 11, **characterized in that** under a second operating condition the signal intensity on the sensitive element changes linearly with the varying of the distance between the radiation source and the device.

15. Method according to claim 11, **characterized in that** under a third operating condition the signal intensity on the sensitive element changes in a quadratic mode with the varying of the distance between the radiation source and the device.

## Patentansprüche

1. Infrarot-Detektor (1), nämlich eine Einbruchssicherungsvorrichtung, der ein Gehäuse (2), mindestens einen lnfrarotempfänger (4), welcher in dem Gehäuse (2) untergebracht ist, und eine lnfrarot-Fokussierungslinse (3, 6) umfasst, welche eine Mehrzahl an Elementarlinsen umfasst, wobei die Fokussierungslinse (3, 6) zumindest drei Segmente (3 a, 3 b, 3 c; 6 a, 6 b, 6 c) aufweist, deren lnfrarotstrahlungs-Fokussierungsmerkmale sich voneinander unterschieden, wobei
die Elementarlinsen in der Weise gewählt sind, dass in einem Zustand höchster Leistung, der Grad des erforderlichen Mindest-Infrarotsignals, das durch den Empfänger erfasst werden kann, höher als der Betriebs-Schwellwert des Empfängers selbst ist, und
die Linse (6) fähig ist, Infrarotstrahlung von zumindest drei verschiedenen Sichtbereichen in Bezug auf die abzusichernde Umgebung zu erfassen,
**dadurch gekennzeichnet, dass** der Sichtbereich nur durch Drehung der Linse in Bezug zum Gehäuse des Detektors und zum Empfänger ausgewählt wird.

2. Infrarot-Detektor nach Anspruch 1, **dadurch gekennzeichnet, dass** jedes der Segmente (6 a, 6 b, 6 c) an ihrem Ende einen Bereich (7) aufweist, der fähig ist, lnfrarotstrahlungen zu erfassen, die sich von dem Bereich direkt unterhalb der Vorrichtung (1) erstrecken.

3. Infrarot-Detektor nach Anspruch 2, **dadurch gekennzeichnet, dass** der Bereich (7), der fähig ist, lnfrarotstrahlungen zu erfassen, die sich von dem Bereich direkt unterhalb der Vorrichtung (1) erstrecken, gemäß des Prinzips der Totalreflexion hergestellt ist, um ihre optische Leistung zu erhöhen.

4. lnfrarot-Detektor nach einem oder mehreren der vorhergehenden Ansprüche, **dadurch gekennzeichnet, dass** ein Erstes der Segmente (6 a, 6 b, 6 c) das Erfassen von Infrarotstrahlung eines Sichtbereichs (5 a) gestattet, der 120° erreichen und / oder überschreiten kann

5. Infrarot-Detektor nach Anspruch 4, **dadurch gekennzeichnet, dass** ein Zweites der Segmente (6 a, 6 b, 6 c) das Erfassen von lnfrarotstrahlung eines Sichtbereichs (5 b) gestattet, der kleiner ist als 120°, aber in einer größeren Länge als das erste Segment (5 a).

6. lnfrarot-Detektor nach Anspruch 4, **dadurch gekennzeichnet, dass** ein Drittes der Segmente (6 a, 6 b, 6 c) das Erfassen von Infrarotstrahlung (5) gestattet, die sich über eine ununterbrochene räumliche Oberfläche erstreckt, die durch flache Oberflächen definiert ist, die einen im Wesentlichen parallelen Zustand zueinander aufweisen.

7. lnfrarot-Detektor nach Anspruch 4, **dadurch gekennzeichnet, dass**, um die optische Leistung zu erhöhen, zumindest eines der Segmente (6 a, 6 b, 6 c) und / oder ein Teil von ihnen gemäß des Prinzips der Totalreflexion hergestellt ist.

8. Infrarot-Detektor nach Anspruch 4, **dadurch gekennzeichnet, dass** das Erhöhen der optischen Leistung einen solchen Grad erreicht, der eine Größenreduzierung und / oder Größenoptimierung der Linse (6) gewährleistet.

9. Infrarot-Detektor nach einem oder mehreren der vorhergehenden Ansprüche, **dadurch gekennzeichnet, dass** die Veränderung der Erfassungsfunktion von Infrarotstrahlung nur durch eine 120° Drehung der Linse (6) auf der Vorrichtung (1) erzielt wird.

10. Herstellungsverfahren für einen Infrarot-Detektor nach einem der Ansprüche 1 bis 9, worin die Herstellung der Infrarotstrahlungs-Fokussierungslinse (3, 6) die folgenden Schritte umfasst:
- Messung des Schemas der Strahlung, die auf jede Elementarlinse einfällt,
- Bestimmung eines erfassbaren Mindest-Schwellenwertsignals,
- Bestimmung der Bereiche der Elementarlinse, die tauglich sind, das Schwellwertsignal zuzuführen,
**dadurch gekennzeichnet, dass** das Verfahren weiter die folgenden Schritte umfasst:
- Verwendung einer Einbruchssicherungsvorrichtung, die dasselbe empfindliche Element und dieselben elektronischen Verstärker einschließt, welche dieselben Merkmale, das heißt den Verstärkungsfaktor und den Durchlassbereich, wie die der Endvorrichtung aufweisen, auf welcher die Linse zusammengesetzt werden soll,
- Austausch der Fresnellinse von der Probevorrichtung durch eine herkömmliche Probelinse, die qualitativ verbessert ist und deren Merkmale bekannt sind,
- Auswahl einer der Norm entsprechenden Person als eine Infrarotstrahlungsquelle,
- Messung des Ausgangssignals des Vorrichtungsverstärkers gemäß des Veränderns der Dimensionen der Linse, der Entfernung der lnfrarotstrahlungsquelle und des Winkels des empfindlichen Elements in Bezug zur Linse,
- Leistungsbewertung des empfindlichen Elements in Abhängigkeit von dem Einfallwinkel der von der Quelle ausgesendeten Infrarotstrahlung,
- theoretische Bewertung der Absorption des Materials, das für die Herstellung der endgültigen Linse verwendet wird, unter Bezugnahme auf die Probelinse, die für Messzwecke verwendet wurde,
- theoretische Bewertung des Anteils des eintreffenden Signals, der reflektiert wird, und des Anteils, der übertragen wird, für jede Elementarlinse, basierend auf der Geometrie,
- theoretische Bewertung, basierend auf der Geometrie und in Abhängigkeit von dem gewünschten Richtungsänderungswinkel, bezüglich der Elementarlinsen, bei denen Refraktion verwendet werden sollte und bezüglich der Elementarlinsen, bei denen Totalreflexion verwendet werden sollte,
- Berechnung der Dimension aller Elementarlinsen, um ein Ausgangssignal des Verstärkers zu erzielen, das unabhängig von dem kontrollierten Bereich ist und einem vorgegebenen Mindest-Schwellenwert gleicht.

11. Verfahren nach Anspruch 10, **dadurch gekennzeichnet, dass** die Messung des Ausgangssignals des Verstärkers der Vorrichtung, in Bezug zu dem Verändern der Entfernung der Infrarotemissionsquelle, das Verteilungsmuster der von der Quelle ausgehenden Strahlung festlegt, welche auf die Linse einfällt und durch das empfindliche Element aufgenommen wird.

12. Verfahren nach Anspruch 11, **dadurch gekennzeichnet, dass** die Oberfläche des empfindlichen Elements von der ganzen Gesamtstrahlung oder nur einem Teil von ihr betroffen ist, die durch die Quelle ausgesendet wird.

13. Verfahren nach Anspruch 11, **dadurch gekennzeichnet, dass** unter einer ersten Betriebsbedingung die Signalstärke auf dem empfindlichen Element unabhängig von der Entfernung der Quelle von der Vorrichtung ist.

14. Verfahren nach Anspruch 11, **dadurch gekennzeichnet, dass** sich unter einer zweiten Betriebsbedingung die Signalstärke auf dem empfindlichen Element mit dem Verändern der Entfernung zwischen der Strahlungsquelle und der Vorrichtung linear verändert.

15. Verfahren nach Anspruch 11, **dadurch gekennzeichnet, dass** sich unter einer dritten Betriebsbedingung die Signalstärke auf dem empfindlichen Element mit dem Verändern der Entfernung zwischen der Strahlungsquelle und der Vorrichtung in einem quadratischen Wert verändert.

## Revendications

1. Dispositif de détection infrarouge (1), à savoir un dispositif antivol, comprenant un corps (2), au moins un capteur infrarouge (4) qui est localisé dans ledit corps (2) et une lentille de focalisation infrarouge (3, 6), comprenant une pluralité de lentilles élémentaires, ladite lentille de focalisation (3, 6) comportant au moins trois segments (3a, 3b, 3c ; 6a, 6b, 6c) dont des caractéristiques de focalisation de rayonnement infrarouge diffèrent entre elles,
dans lequel :
lesdites lentilles élémentaires sont choisies de telle sorte que, sous une condition de performance la plus élevée, le niveau du signal infrarouge minimum requis qui peut être détecté par le capteur soit supérieur à la valeur de seuil de fonctionnement du capteur lui-même ; et
ladite lentille (6) peut détecter un rayonnement infrarouge en provenance d'au moins trois plages visuelles différentes en relation avec l'environnement à protéger,
**caractérisé en ce que** ladite plage visuelle est sélectionnée seulement par l'intermédiaire de la rotation desdites lentilles en relation avec le corps du dispositif de détection et avec ledit capteur.

2. Dispositif de détection infrarouge selon la revendication 1, **caractérisé en ce que** chacun desdits segments (6a, 6b, 6c) comporte une zone (7) au niveau de son extrémité permettant de détecter des rayonnements infrarouges provenant de la zone directement sous le dispositif (1).

3. Dispositif de détection infrarouge selon la revendication 2, **caractérisé en ce que** ladite zone (7) permettant de détecter des rayonnements infrarouges provenant de la zone directement sous le dispositif (1) est fabriquée conformément au principe de la réflexion interne totale afin d'améliorer son rendement optique.

4. Dispositif de détection infrarouge selon l'une ou plusieurs des revendications précédentes, **caractérisé en ce qu'**un premier desdits segments (6a, 6b, 6c) permet la détection d'un rayonnement infrarouge d'une plage visuelle (5a) qui peut atteindre et/ou excéder 120°.

5. Dispositif de détection infrarouge selon la revendication 4, **caractérisé en ce qu'**un second desdits segments (6a, 6b, 6c) permet la détection d'un rayonnement infrarouge d'une plage visuelle (5b) qui est inférieure à 120° mais jusqu'à une longueur plus lointaine que ledit premier segment (5a).

6. Dispositif de détection infrarouge selon la revendication 4, **caractérisé en ce qu'**un troisième desdits segments (6a, 6b, 6c) permet la détection d'un rayonnement infrarouge (5) qui s'étend sur une surface spatiale continue qui est définie par des surfaces planes sensiblement parallèles entre elles.

7. Dispositif de détection infrarouge selon la revendication 4, **caractérisé en ce que**, afin d'améliorer le rendement optique, au moins un et/ou une partie desdits segments (6a, 6b, 6c) est fabriquée conformément au principe de la réflexion interne totale.

8. Dispositif de détection infrarouge selon la revendication 4, **caractérisé en ce que** ladite amélioration de rendement optique atteint un niveau qui assure une réduction de dimension et/ou une optimisation de dimension de ladite lentille (6).

9. Dispositif de détection infrarouge selon une ou plusieurs des revendication précédentes, **caractérisé en ce que** la variation de la fonction de détection de rayonnement infrarouge est obtenue en faisant tourner seulement ladite lentille (6) de 120° sur le dispositif (1).

10. Procédé de fabrication pour un dispositif de détection infrarouge selon l'une quelconque des revendications 1 à 9, dans lequel la fabrication de ladite lentille de focalisation de rayonnement infrarouge (3, 6) comprend les étapes qui suivent :
mesure du schéma du rayonnement qui arrive en incidence sur chaque lentille élémentaire ;
détermination d'un signal de seuil minimum détectable ;
détermination des aires de la lentille élémentaire susceptibles d'appliquer ledit signal de seuil,
**caractérisé en ce que** le procédé comprend en outre les étapes qui suivent :
l'utilisation d'un dispositif antivol incluant le même élément sensible et des amplificateurs électroniques qui présentent les mêmes caractéristiques, à savoir le gain et la bande passante, du dispositif final sur lequel la lentille doit être assemblée ;
le remplacement sur le dispositif échantillon de sa lentille de Fresnel par une lentille échantillon classique qui est améliorée de façon qualitative et dont les caractéristiques sont connues ;
la sélection d'une personne en tant que source de rayonnement infrarouge conformément à des spécifications standard ;
la mesure du signal de sortie de l'amplificateur de dispositif conformément à la variation des dimensions de la lentille, de la distance de la source d'émission infrarouge et de l'angle de l'élément sensible par rapport à la lentille ;
l'évaluation de l'efficacité de l'élément sensible en fonction de l'angle d'incidence du rayonnement infrarouge émis par la source ;
l'évaluation théorique de l'absorption du matériau utilisé pour fabriquer la lentille finale, par référence à la lentille échantillon utilisée à des fins de mesure ;
l'évaluation théorique, sur la base de la géométrie, pour chaque lentille élémentaire, de la partie du signal incident qui est réfléchie et de la partie qui est transmise ;
l'évaluation théorique, sur la base de la géométrie et en fonction de l'angle de déviation qui est souhaité, en ce qui concerne les lentilles élémentaires pour lesquelles la réfraction doit être utilisée et les lentilles élémentaires pour lesquelles une réflexion interne totale doit être utilisée ; et
le calcul de la dimension de toutes les lentilles élémentaires afin d'obtenir un signal de sortie de l'amplificateur qui est indépendant de la zone sous commande et qui est égal à une valeur de seuil préétablie minimum.

11. Procédé selon la revendication 10, **caractérisé en ce que** la mesure du signal de sortie de l'amplificateur du dispositif détermine, en relation avec la variation de la distance de la source d'émission infrarouge, le motif de la distribution du rayonnement provenant de la source arrivant en incidence sur la lentille et reçu par l'élément sensible.

12. Procédé selon la revendication 11, **caractérisé en ce que** la surface de l'élément sensible est concernée par la totalité ou par simplement une partie du rayonnement total qui est émis par la source.

13. Procédé selon la revendication 11, **caractérisé en ce que**, sous une première condition de fonctionnement, l'intensité du signal sur l'élément sensible est indépendante de la distance de la source par rapport au dispositif.

14. Procédé selon la revendication 11, **caractérisé en ce que**, sous une seconde condition de fonctionnement, l'intensité de signal sur l'élément sensible varie linéairement en fonction de la variation de la distance entre la source de rayonnement et le dispositif.

15. Procédé selon la revendication 11, **caractérisé en ce que**, sous une troisième condition de fonctionnement, l'intensité de signal sur l'élément sensible varie selon un mode quadratique en fonction de la variation de la distance entre la source de rayonnement et le dispositif.
